Europäisches Patentamt

European Patent Office

Office européen des brevets

(19)

(11) Numéro de publication : **0 161 582**
**B1**

(12) # FASCICULE DE BREVET EUROPÉEN

(45) Date de publication du fascicule du brevet :
10.02.88

(51) Int. Cl.⁴ : **G 04 C   3/14, H 02 P   8/00**

(21) Numéro de dépôt : 85105318.1

(22) Date de dépôt : 02.05.85

(54) **Ensemble moteur fonctionnant pas à pas.**

(30) Priorité : 04.05.84 CH 2180/84

(43) Date de publication de la demande :
21.11.85 Bulletin 85/47

(45) Mention de la délivrance du brevet :
10.02.88 Bulletin 88/06

(84) Etats contractants désignés :
DE FR GB

(56) Documents cités :
EP-A- 0 026 002
EP-A- 0 087 387
US-A- 3 958 167
PATENTS ABSTRACTS OF JAPAN, vol. 5, no. 171 (E-80) [843], 30th octobre 1981 ; JP - A - 56 98398

(73) Titulaire : **ETA S.A. Fabriques d'Ebauches
Schild-Rust-Strasse 17
CH-2540 Grenchen (CH)**

(72) Inventeur : **Besson, René
Avenue du Mail 40
CH-2000 Neuchâtel (CH)**
Inventeur : **Guerin, Yves
Däderizstrasse 108
CH-2540 Granges (CH)**

(74) Mandataire : **Barbeaux, Bernard et al
ICB Ingénieurs Conseils en Brevets SA Passage
Max. Meuron 6
CH-2001 Neuchâtel (CH)**

EP 0 161 582 B1

## Description

La présente invention a pour objet un ensemble moteur fonctionnant pas à pas et utilisable, notamment mais non exclusivement, dans une montre électronique à affichage analogique.

Plus précisément, l'invention concerne un ensemble moteur qui permet d'obtenir une vitesse de rotation nettement accrue par rapport à celle que peuvent atteindre les moteurs pas à pas actuellement utilisés en horlogerie.

Par ensemble moteur, il faut entendre non seulement le moteur proprement dit qui est constitué par le rotor le stator et le bobinage, mais également le circuit de commande associé qui permet d'élaborer les impulsions motrices appliquées au moteur selon le type de fonctionnement désiré.

Par ailleurs l'expression « fonctionnant pas à pas » signifie que le moteur est conçu pour marcher de cette façon mais cela n'exclut pas la possibilité, lorsqu'elle existe, de le faire tourner de façon continue, c'est-à-dire sans qu'il y ait arrêt du rotor entre deux impulsions motrices successives.

Dans le cas d'une montre qui comporte une aiguille de secondes entraînée par un moteur pas à pas et dans laquelle la correction se fait mécaniquement, il suffit de disposer d'un moteur qui fait un nombre de pas par seconde égal à celui que doit faire l'aiguille des secondes pour passer d'une division à la suivante. Ce nombre de pas est le plus souvent égal à un et parfois à deux ou à six. Cela signifie donc que le moteur doit seulement faire six par au maximum, par seconde, ce qui ne présente pas de difficulté.

En revanche, un problème se pose déjà lorsque, même dans une montre sans aiguille de secondes, on veut faire des corrections ou des changements de fuseau horaire en commandant directement le moteur. Dans ce cas il est nécessaire de pouvoir faire tourner le moteur à une fréquence nettement plus élevée que 6 Hz, c'est-à-dire six pas par seconde. Or actuellement, avec des moteurs pas à pas de type Lavet par exemple, commandés de façon classique, il est pratiquement impossible d'aller au-delà de 64 Hz et même de garantir un bon fonctionnement du moteur à plus de 50 Hz. Si l'on prend le cas d'une montre à aiguilles de minutes et d'heures dans laquelle il faut que le moteur fasse deux pas pour que l'aiguille des minutes progresse d'une division et si, de plus, on veut effectuer un changement de fuseau horaire de six heures ce qui correspond à la correction la plus longue que l'on ait à faire si l'on s'arrange pour pouvoir faire tourner le moteur dans les deux sens, en utilisant par exemple la solution qui fait l'objet du brevet US 4 112 671, pour le commander, on voit que, même avec une fréquence de 64 Hz, il faudra plus de onze secondes pour effectuer cette seule correction. Ceci est évidemment difficilement acceptable.

Quant à la mise à l'heure électronique dans une montre avec aiguille de secondes elle n'est envisageable que si l'on fait appel à au moins deux moteurs pour entraîner les aiguilles, par exemple un pour l'aiguille des secondes et un pour celles des minutes et des heures ou un pour l'aiguille des secondes et celle des minutes et un autre pour l'aiguille des heures. L'emploi d'un seul moteur conduirait à des temps de correction exorbitants.

La demande de brevet européenne publiée sous le numéro 0 103 542 indique une solution intéressante qui permet de faire fonctionner un moteur de type Lavet en marche avant et en marche arrière à une vitesse beaucoup plus grande que 50 ou 64 pas par seconde. Cette solution consiste à appliquer au moteur d'abord une impulsion de lancement en marche avant ou en marche arrière pour provoquer effectivement le démarrage du moteur dans le sens de rotation souhaité, puis un train d'impulsions simples d'entretien de polarité alternée et de durée plus courte que celle de l'impulsion de démarrage, et enfin une impulsion simple d'arrêt de polarité opposée à celle de la dernière impulsion d'entretien et plus longue que celle-ci. Dans le cas de la marche avant l'impulsion de démarrage est comme les autres une impulsion simple alors que, pour la marche arrière cette impulsion de démarrage est formée de trois impulsions élémentaires de polarité alternée, la polarité de la première impulsion dépendant de la position de repos occupée initialement par le rotor. La première impulsion élémentaire a pour rôle de lancer le moteur en marche avant de façon que le rotor acquiert une énergie suffisante pour pouvoir franchir le premier pas en marche arrière sous l'effet des deux impulsions suivantes.

Les instants d'application des impulsions d'entraînement et d'arrêt par rapport au début de l'impulsion de démarrage peuvent être soit déterminés à l'avance, compte tenu des caractéristiques du moteur, soit fixés en détectant une grandeur représentative du mouvement du rotor, comme, par exemple, la tension induite par ce dernier dans la bobine du moteur.

Cette façon de commander un moteur Lavet classique permet d'atteindre aussi bien pour la marche avant que pour la marche arrière une fréquence très proche de la fréquence théorique de synchronisme qui est de l'ordre de 200 Hz et conduit donc à des temps de correction raisonnables pour une montre indiquant seulement les minutes et les heures mais encore beaucoup trop longs pour une montre avec aiguille de secondes. De plus elle nécessite un circuit de commande du moteur relativement compliqué.

La présente invention a principalement pour but de fournir une autre solution pour faire fonctionner un moteur pas à pas à une vitesse nettement supérieure à celles atteintes jusqu'à présent, tout au moins dans le domaine de l'horlogerie.

Un autre but de l'invention est de fournir une solution qui, combinée à des méthodes connues de commande des moteurs pas à pas, permette d'atteindre des vitesses beaucoup plus élevées que deux cent pas par seconde.

De plus cette solution doit pouvoir être utilisée pour différents types de moteurs, en particulier parmi ceux qui servent actuellement à la fabrication de montres.

Ces buts sont atteints grâce au fait que dans un ensemble moteur conforme à l'invention qui comprend classiquement un moteur pas à pas muni d'un rotor, d'un stator et d'un bobinage porté par le stator, et un circuit de commande pour appliquer au bobinage des impulsions motrices de fréquence basse pour faire fonctionner le moteur à petite vitesse et des impulsions motrices de fréquence élevée pour faire fonctionner le moteur à grande vitesse, le bobinage comprend n enroulements (n supérieur ou égal à 2) et que le circuit de commande est conçu pour connecter les n enroulements en série lorsqu'il leur applique les impulsions motrices de fréquence basse et en parallèle lorsqu'il leur aplique les impulsions motrices de fréquence élevée.

Il est clair qu'en pratique le nombre n d'enroulements doit être limité. Il sera le plus souvent choisi égal à deux, éventuellement à trois.

Par ailleurs il peut être avantageux, notamment du point de vue fabrication, d'utiliser des enroulements identiques, c'est-à-dire réalisés à partir du même fil et comportant le même nombre de spires, mais ceci n'est pas obligatoire.

La manière la plus simple et la plus économique de mettre en œuvre l'invention consiste naturellement à partir d'un moteur pas à pas déjà mis au point et fabriqué, à substituer à la bobine unique ou à chaque bobine de ce moteur deux enroulements distincts ou plus et à lui adjoindre un circuit de commande adapté. Dans ce cas il y a naturellement tout intérêt à ce que le nombre total de spires et la somme des résistances électriques des enroulements soient égaux ou à peu près au nombre de spires et à la résistance de la bobine qu'ils remplacent, car, sans autres modifications que celle du bobinage, le moteur peut alors continuer à être commandé par les mêmes impulsions à vitesse lente et à avoir pratiquement les mêmes performances, en particulier une consommation faible et un rendement optimal, lorsqu'il fonctionne à ce régime.

A noter que du point de vue électrique plusieurs enroulements connectés en série sont équivalents à un seul, à condition naturellement que la nature et le diamètre du fil ainsi que le diamètre et le nombre total de spires soient les mêmes dans les deux cas. Il en est de même du point de vue magnétique. Par exemple, dans le cas de deux enroulements identiques ayant chacun une inductance propre L et en admettant que le coefficient de couplage entre les enroulements est égal à un, l'inductance propre résultante est égale à $4 L$ c'est-à-dire à l'inductance propre de la bobine unique correspondante.

Par contre, lorsque les enroulements sont connectés en parallèle, le bobinage présente à la fois une résistance et une inductance propre nettement plus faibles que celles de la bobine simple correspondante. Par exemple, dans le cas particulier envisagé précédemment de deux enroulements identiques, cette résistance et cette inductance sont seulement égales à $R/2$, si R désigne la résistance d'un enroulement, et à L. La résistance du bobinage étant réduite, le rotor reçoit davantage d'énergie lorsqu'une impulsion motrice est appliquée au moteur et, du fait que l'inductance propre est, elle aussi plus faible, le bobinage s'oppose moins au transfert de cette énergie du circuit de commande vers le rotor. Grâce à celà, il est possible de réduire, par exemple de moitié, la durée des impulsions motrices par rapport au cas où l'on ne prévoit qu'un seul enroulement et d'augmenter sensiblement la fréquence maximale à laquelle le moteur peut être commandé.

Naturellement, la consommation du moteur est alors plus importante, mais ceci n'est pas un gros inconvénient dans le cas d'une montre électronique où le moteur n'a que rarement l'occasion de fonctionner à grande vitesse. Cette marche rapide n'est nécessaire qu'au moment d'une mise à l'heure et, éventuellement, lorsque les aiguilles sont déplacées pour indiquer autre chose que l'heure normale, par exemple une heure d'alarme ou l'heure locale dans un autre fuseau horaire.

D'autres caractéristiques et avantages de l'ensemble moteur selon l'invention apparaîtront à la lecture de la description qui suit d'un exemple de réalisation et d'une variante, description faite en référence au dessin annexé sur lequel :

la figure 1 est une vue schématique de cette forme d'exécution de l'ensemble moteur selon l'invention ;

les figures 2 et 3 sont des schémas de détail montrant deux formes possibles de réalisation du circuit d'alimentation du moteur qui fait partie du circuit de commande représenté sur la figure 1 ; et

la figure 4 est un autre schéma de détail du circuit d'alimentation correspondant à la forme d'exécution de la figure 3 mais pour la variante de l'ensemble moteur représenté sur la figure 1.

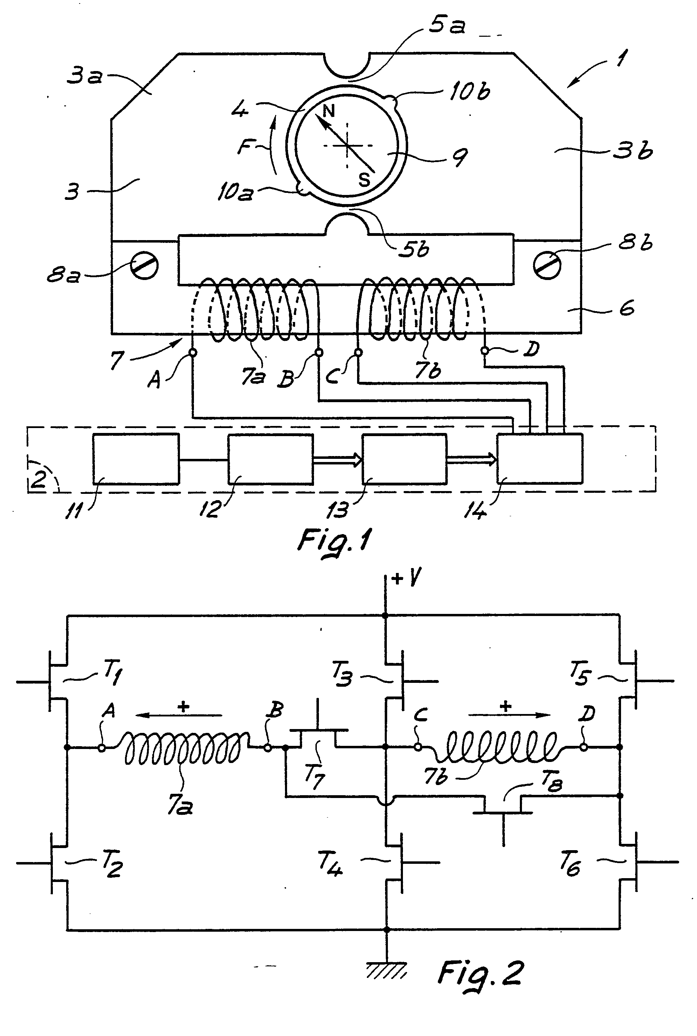

Tel qu'il est représenté schématiquement sur la figure 1 l'ensemble moteur selon l'invention est plus particulièrement destiné à équiper une montre et comprend un moteur pas à pas monophasé bipolaire 1, de type Lavet, à stator en une seule pièce et un circuit de commande 2 adapté à ce genre de moteur.

Le moteur 1 comprend classiquement un stator 3 avec deux parties polaires $3_a$, $3_b$ entre lesquelles est ménagé un évidement central 4, de forme essentiellement cylindrique, et qui sont réunies entre elles de part et d'autre de cet évidement par des parties rétrécies ou isthmes $5_a$, $5_b$, prévues pour pouvoir constituer des zones saturables en flux magnétique.

Les extrémités des parties polaires $3_a$, $3_b$ opposées à celles qui entourent l'évidement central 4 sont reliées magnétiquement entre elles par une pièce 6 qui constitue le noyau du bobinage 7. L'assemblage des parties polaires $3_a$, $3_b$ et du noyau 6 est réalisé au moyen de vis $8_a$ et $8_b$.

Un rotor 9 comprenant un aimant permanent cylindrique, à aimantation diamétrale est logé dans l'évidement central 4 de manière à pouvoir tourner autour d'un axe qui coïncide avec celui de cet évidement.

D'autre part, la paroi interne du stator qui délimite l'évidement central 4 présente deux encoches $10_a$, $10_b$ diamétralement opposées qui permettent d'imposer au rotor 9 deux positions de repos dans lesquelles son axe d'aimantation N-S est sensiblement perpendiculaire à la direction joignant les encoches $10_a$, $10_b$, cette direction faisant par ailleurs un angle d'environ 45° avec celle joignant les isthmes $5_a$ et $5_b$.

Pour en revenir au bobinage 7, celui-ci correspond au cas particulier envisagé précédemment, c'est-à-dire qu'il se compose de deux enroulements identiques $7_a$ et $7_b$ qui ont chacun un nombre N de spires et une résistance R, ces valeurs N et R étant de préférence égales ou à peu près à la moitié de celles qui sont choisies habituellement pour la bobine unique qui équipe normalement un moteur Lavet tel que celui qui vient d'être décrit.

Les deux enroulements $7_a$ et $7_b$ ont été représentés côte à côte sur le dessin et bobinés en sens inverse mais ceci n'est bien entendu pas obligatoire. Les deux enroulements pourraient tout aussi bien être par exemple placés l'un autour de l'autre. On pourrait également imaginer un noyau en forme de U avec un enroulement autour de chaque branche verticale du U. L'essentiel est que lorsque le bobinage est alimenté en courant par le circuit de commande 2, les deux enroulements $7_a$, $7_b$ créent dans le stator des flux magnétiques qui s'ajoutent.

Le circuit de commande 2 comprend quant à lui un oscillateur 11 englobant un résonateur à quartz et son circuit d'entretien, un diviseur de fréquence 12, ainsi qu'une logique de commande 13 qui élabore à partir de signaux de différentes fréquences délivrés par le diviseur et de signaux produits par des moyens de commande de la montre non représentés, des signaux logiques qui sont appliqués à un circuit d'alimentation 14 du moteur formé de transistors de puissance et chargé à la fois d'assurer la connexion en série ou en parallèle des enroulements $7_a$ et $7_b$ et de l'application à ceux-ci d'impulsions motrices bipolaires.

L'oscillateur 11 et le diviseur de fréquence sont tout à fait classiques. Quant à la logique de commande 13, elle ne sera pas décrite en détail car son schéma dépend de très nombreux facteurs, notamment de la façon dont est réalisé le circuit d'alimentation, des fréquences adoptées pour la commande du moteur, de la durée ou des durées choisies pour les impulsions motrices et des moyens de commande manuels ou non dont est munie la montre.

De plus ce schéma sera différent selon que l'on prévoit de ne faire fonctionner le moteur que dans un sens, celui de la marche avant indiqué par la flèche F sur la figure 1, ou dans les deux en utilisant par exemple la solution proposée dans le brevet américain n° 4 112 671 précité, qui consiste à alimenter le moteur comme d'habitude par des impulsions simples de polarité alternée pour la marche avant et à prévoir pour la marche arrière et pour chaque pas un groupe de trois impulsions élémentaires successives, de polarité alternée, la première servant à lancer le rotor dans le sens de la marche avant afin qu'il acquiert une énergie suffisante pour pouvoir tourner ensuite dans le sens inverse sous l'effet des deux autres.

Par ailleurs, il y a pratiquement toujours intérêt, lorsque le moteur tourne à faible vitesse, à court-circuiter le bobinage tout au moins pendant un certain temps après l'application de chaque impulsion motrice, pour amortir les oscillations du rotor en fin de pas. Ceci n'est plus forcément vrai à vitesse élevée. Dans ce cas il peut être au contraire avantageux de laisser le bobinage en circuit ouvert entre les impulsions pour éviter qu'un courant induit circule dans les enroulements et que le rotor soit de ce fait freiné. Enfin on peut également prévoir de mettre les bobines en circuit ouvert pendant une partie du temps de fonctionnement du moteur à grande vitesse et les court-circuiter ensuite pour par exemple mieux contrôler l'arrêt du rotor au bout d'un nombre de pas déterminé.

La logique de commande 13 peut donc prendre de très nombreuses formes qui sont toutes à la portée de l'homme de métier, d'autant plus qu'il est déjà bien connu dans le cas d'une montre électronique équipée d'un moteur pas à pas de type Lavet de commander ce moteur avec des impulsions motrices de fréquence et de durée différentes selon que la montre est en régime de fonctionnement normal ou en mode correction (voir par exemple le brevet américain n° 4 150 536).

En ce qui concerne l'invention, l'essentiel est que la logique 13 soit au moins capable de produire normalement des signaux permettant au circuit d'alimentation 14 de connecter les enroulements $7_a$ et $7_b$ en série et de leur appliquer des impulsions motrices de polarité alternée et de fréquence basse qui font tourner le moteur en marche avant, à raison d'un ou deux pas par minute par exemple, et, sur commande de l'utilisateur de la montre, d'autres signaux grâce auxquels le circuit d'alimentation peut alimenter les deux enroulements en parallèle par des impulsions motrices également de polarité alternée mais de fréquence beaucoup plus élevée pour que le moteur continue à tourner dans le même sens mais pratiquement à la vitesse maximale qu'il peut atteindre.

Naturellement, comme cette vitesse maximale peut être augmentée en diminuant la durée des impulsions motrices, il y a le plus souvent tout intérêt à prévoir une logique de commande qui permet d'alimenter le moteur par des impulsions plus courtes à vitesse élevée qu'à vitesse faible, lorsque cela est possible.

Par ailleurs, il est bien évident qu'il est préférable de pouvoir faire fonctionner le moteur dans les deux sens pour réduire les temps de correction.

4

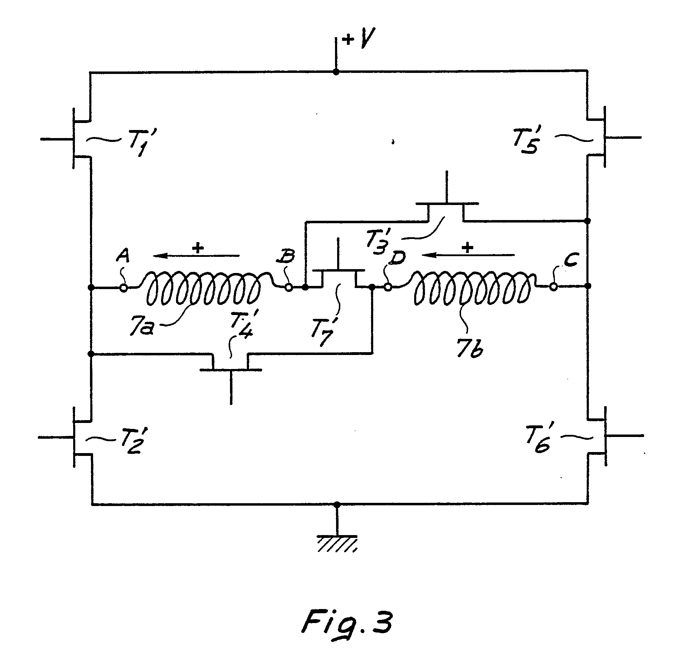

A la différence de la logique de commande 13, le circuit d'alimentation 14 ne peut être réalisé que sous un nombre assez limité de formes dont deux sont représentées sur les figures 2 et 3.

Le circuit de la figure 2 comporte trois branches connectées en parallèle entre les deux pôles de la source de tension continue non représentée qui sert à alimenter en énergie l'ensemble du circuit de commande du moteur.

Chacune des trois branches est formée de deux transistors à effet de champ MOS complémentaires branchés en série, les drains de ces transistors étant reliés entre eux et leurs sources respectives connectées aux pôles de la source de tension. Sur la figure les transistors à canal P portent les références $T_1$, $T_3$, $T_5$, tandis que les transistors à canal N sont désignés par $T_2$, $T_4$ et $T_6$.

Une première borne A de l'enroulement $7_a$ (voir également la figure 1) est connectée directement au point de liaison des drains des transistors $T_1$ et $T_2$, tandis que l'autre borne B de ce même enroulement est reliée au point de jonction des drains des transistors $T_3$ et $T_4$ par un septième transistor $T_7$ qui peut être de type P ou N. Les bornes C et D de l'enroulement $7_b$ sont quant à elles reliées l'une, C, au point de liaison entre les transistors $T_3$ et $T_4$ et l'autre, D, au point de jonction entre les drains des transistors $T_5$ et $T_6$.

Enfin, le circuit d'alimentation comporte également un huitième transistor $T_8$ de type P ou N dont le trajet source-drain relie la borne B de l'enroulement $7_a$ au point de jonction entre les transistors $T_5$ et $T_6$ et dont la grille est reliée, comme celles de tous les autres transistors $T_1$ à $T_7$ à la logique de commande 13.

Le tableau I ci-dessous résume le fonctionnement du circuit.

Dans ce tableau la première colonne indique si les enroulements sont connectés en série ou en parallèle. Dans la seconde colonne le signe « + » signifie que le bobinage est parcouru par un courant positif, ce qui, pour chaque enroulement correspond au sens indiqué par une flèche sur la figure 2, le signe « — » que le bobinage est traversé par un courant négatif et les abréviations « cc » et « co » que les enroulements sont mis respectivement en court-circuit et en circuit ouvert. Les autres colonnes signalent pour chaque situation l'état de conduction des différents transistors. Par analogie avec des interrupteurs le mot « fermé » signifie que le transistor conduit et le mot « ouvert » qu'il est bloqué.

A noter que les flèches qui indiquent le sens positif du courant dans les enroulements sont opposées du fait que ces derniers sont, comme sur la figure 1, bobinés en sens inverse.

Il faut également signaler qu'il existe en fait plusieurs possibilités pour mettre les enroulements en court-circuit et en circuit-ouvert alors que le tableau n'en donne qu'une seule.

Tableau I

|  |  | $T_1$ | $T_2$ | $T_3$ | $T_4$ | $T_5$ | $T_6$ | $T_7$ | $T_8$ |
|---|---|---|---|---|---|---|---|---|---|
| Série | + | ouvert | fermé | fermé | ouvert | ouvert | ouvert | ouvert | fermé |
| | - | fermé | ouvert | ouvert | fermé | ouvert | ouvert | | |
| | cc | fermé | ouvert | fermé | ouvert | ouvert | ouvert | | |
| | co | ouvert | ouvert | ouvert | ouvert | ouvert | ouvert | | |
| Paral-lèle | + | ouvert | fermé | fermé | ouvert | ouvert | fermé | fermé | ouvert |
| | - | fermé | ouvert | ouvert | fermé | fermé | ouvert | | |
| | cc | fermé | ouvert | fermé | ouvert | fermé | ouvert | | |
| | co | ouvert | ouvert | ouvert | ouvert | ouvert | ouvert | | |

L'autre forme d'exécution du circuit d'alimentation, qui est représentée sur la figure 3, est plus intéressante que celle qui vient d'être décrite en ce sens qu'elle permet d'économiser un transistor.

Dans ce cas le circuit comprend un pont classique de quatre transistors branché entre les pôles positif et négatif de la source de tension d'alimentation, avec dans chaque branche du pont, un transistor de type P $T'_1$, respectivement $T'_5$, et un transistor de type N $T'_2$, respectivement $T'_6$.

Dans la diagonale du pont se trouvent l'enroulement $7_a$ avec sa première borne, A, reliée au point de jonction des drains des transistors $T'_1$ et $T'_2$, l'enroulement $7_b$ avex sa première borne C connectée au point de liaison des transistors $T'_5$ et $T'_6$, ainsi qu'un transistor $T'_7$ de type P ou N, dont le trajet de conduction relie les secondes bornes B et D des deux enroulements. Font également partie de cette diagonale un transistor $T'_3$ qui permet de connecter la borne B de l'enroulement $7_a$ au point de jonction entre les transistors $T'_5$ et $T'_6$ et un autre transistor, $T'_4$, branché entre le point de liaison des transistors

$T'_1$ et $T'_2$ et la seconde borne, D, de l'enroulement $7_b$. Comme le transistor $T'_7$, les transistors $T'_3$ et $T'_4$ peuvent être de type P ou N.

Les transistors $T'_1$, $T'_2$, $T'_5$, $T'_6$ ont pour rôle d'appliquer des impulsions motrices au bobinage et les transistors $T'_3$, $T'_4$ et $T'_7$ celui de connecter les deux enroulements en série ou en parallèle.

Avec cette disposition les flèches indiquant le sens positif du courant dans les enroulements ont la même orientation.

Le fonctionnement de ce circuit est donné dans le tableau II ci-dessous, qui est tout à fait analogue au tableau I.

Tableau II

| | | $T'_1$ | $T'_2$ | $T'_3$ | $T'_4$ | $T'_5$ | $T'_6$ | $T'_7$ |
|---|---|---|---|---|---|---|---|---|
| série | + | ouvert | fermé | | | fermé | ouvert | |
| | - | fermé | ouvert | ouvert | ouvert | ouvert | fermé | fermé |
| | cc | fermé | ouvert | | | fermé | ouvert | |
| | co | ouvert | ouvert | | | ouvert | ouvert | |
| Paral-lèle | + | ouvert | fermé | | | fermé | ouvert | |
| | - | fermé | ouvert | fermé | fermé | ouvert | fermé | ouvert |
| | cc | fermé | ouvert | | | fermé | ouvert | |
| | co | ouvert | ouvert | | | ouvert | ouvert | |

A titre d'exemple, avec un moteur ayant les caractéristiques mécaniques et électriques suivantes :
Perméance du circuit : $A = L/N^2 = 40$ nH
Valeur maximale du coefficient de couplage ; $\gamma_o = 0,25$ µNm/At
Moment d'inertie du rotor : $J = 3,5 \cdot 10^{-12}$ kgm²
Couple de frottement sec : $C_s = 3,5 \times 10^{-8}$ Nm
Coefficient de frottement visqueux : $f = 10^{-10}$ Nm/rd/s
Valeur maximale du couple de positonnement : $T_2 = 0,35$ µNm
Nombre de spires de chaque enroulement : $N = 13\,300$
Résistance de chaque enroulement : $R = 3\,700\,\Omega$
et avec une tension d'alimentation de 1,55 V, on obtient, lorsque les deux enroulements sont connectés en série et pour une durée d'impulsion motrice de 7,8 ms, un couple utile maximal de 0,22 µNm et un courant moyen d'environ 105 µA. Dans ce cas la fréquence maximale à laquelle le moteur peut être commandé est la même que pour un moteur à une seule bobine, c'est-à-dire de l'ordre de 50 ou 60 Hz.

Par contre, si les deux enroulements sont branchés en parallèle on a, pour une durée d'impulsions deux fois plus faible, un couple utile de 0,30 µNm et un courant moyen d'environ 518 µA. La fréquence maximale est alors doublée.

Comme il y n'y a pas de raison d'avoir un couple utile plus important à vitesse élevée qu'à vitesse faible, il est encore possible de réduire la durée des impulsions motrices jusqu'à ce que ce couple prenne à peu près la même valeur que pour le branchement des enroulements en série, ce qui arrive pour des impulsions d'environ 3 ms. Ceci conduit à un accroissement supplémentaire d'à peu près 30 % de la fréquence maximale et porte sa valeur à 130 ou 150 Hz.

On s'approche donc de la fréquence théorique de synchronisme qui est de 200 Hz.

De plus, il est encore possible d'améliorer les performances du moteur à grande vitesse, sans porter atteinte au fonctionnement à petite vitesse, en prévoyant des enroulements de résistance différente, par exemple R/2 et 3R/2, pour obtenir une résistance équivalente encore plus faible.

L'invention permet donc d'aboutir pratiquement au même résultat que la solution qui fait l'objet de la demande de brevet suisse n° 5384/82, avec un circuit de commande plus simple.

Il n'empêche que les deux méthodes sont tout à fait compatibles et que, pour augmenter encore la vitesse maximale de fonctionnement du moteur, on peut très bien faire appel aux deux en même temps.

Vu que la fréquence de synchronisme est donnée par la formule :

$$f_s = \left| \frac{Ui}{2\,\pi.\sqrt{}\,\gamma^0} \right|$$

où $N$ désigne d'une manière générale le nombre de spires du bobinage et où $U_i$ est la tension induite par le mouvement du rotor et $\gamma_0$ la valeur maximale du coefficient de couplage, il est clair que cette fréquence est doublée lorsque le nombre de spires est divisé par deux. Or c'est précisément ce qui arrive lorsque, dans le cas de l'ensemble moteur de la figure 1, on passe de la connexion en série à celle en parallèle des deux enroulements $7_a$ et $7_b$.

La combinaison des deux solutions permet donc d'atteindre une fréquence maximale de l'ordre de 400 Hz.

Malheureusement cela est encore insuffisant pour une montre avec aiguille de secondes car une correction de six heures prendrait alors plus de 50 secondes. En fait, pour obtenir des temps de correction acceptables, il faudrait une fréquence environ cinq fois plus grande.

L'expérience a montré qu'il était possible d'atteindre une telle valeur en faisant appel à la fois à l'invention et à la technique bien connue de l'asservissement. Dans le cas particulier de l'ensemble moteur de la figure 1 cela revient à inclure, en plus, dans le circuit de commande 2 un système pour détecter en permanence un paramètre représentatif de la position du rotor 9 lorsque ce dernier tourne à grande vitesse et à réaliser la logique de commande 13 de façon qu'un courant soit appliqué sans arrêt aux enroulements $7_a$, $7_b$ et que le sens de ce courant soit inversé deux fois par tour, lorsque le rotor passe par des positions opposées bien déterminées. Ces positions peuvent être celles de repos, mais elles sont de préférence situées avant. Par exemple l'inversion peut se faire peu après que l'axe N-S du rotor se soit trouvé dans la direction principale du champ magnétique dans le stator, c'est-à-dire la direction perpendiculaire à celle qui joint les isthmes $5_a$ et $5_b$. Quant au paramètre détecté, il peut s'agir du courant dans les enroulements, de la tension induite dans les enroulements par le mouvement du rotor, de la variation de flux dans le stator, etc...

Lorsque l'on utilise cette technique d'asservissement avec un moteur dont les différents paramètres ont les valeurs indiquées précédemment on constate que la vitesse du rotor se stabilise à environ 620 pas par seconde seulement. Par contre en modifiant ces valeurs il est possible d'atteindre les 2 000 Hz recherchés.

On conçoit facilement que lorsque le rotor est amené à tourner à de telles vitesses il soit nécessaire de le freiner pour pouvoir l'arrêter au moment voulu, surtout si le nombre de pas qu'il effectue rapidement doit être parfaitement déterminé, ce qui est le cas par exemple pour un changement de fuseau horaire ou lorsque les aiguilles doivent aller indiquer autre chose que l'heure courante et revenir ensuite à leur place.

Une solution efficace pour réaliser ce freinage consiste à prévoir dans le circuit de commande du moteur une résistance de valeur adéquate ainsi que des moyens permettant de connecter cette résistance en série avec les deux enroulements alors branchés en parallèle, ceci pendant un certain temps avant la cessation de l'envoi d'impulsions motrices haute fréquence au moteur.

Naturellement le freinage est d'autant plus important que la valeur de la résistance est élevée et cette valeur doit être choisie en fonction des paramètres des enroulements, de la vitesse à laquelle il est prévu de faire tourner le rotor et du temps pendant lequel on envisage de brancher la résistance. Elle sera en général du même ordre de grandeur que celle(s) des enroulements et très souvent on poura opter pour une valeur sensiblement égale à la différence de celles que prend la résistance équivalente des enroulements lorsque ceux-ci sont connectés en série et en parallèle, ce qui, dans le cas particulier de deux enroulements identiques de résistance R, correspond à 3R/2.

Ainsi, dans l'exemple numérique qui a été choisi, cette valeur 3R/2 est d'à peu près 5 000 $\Omega$ et elle permet de faire chuter la vitesse du rotor de 620 à environ 120 pas par seconde, ce qui est tout à fait convenable.

A noter par ailleurs que la résistance additionnelle peut très bien être utilisée non seulement pour ralentir le moteur à la fin d'une période de fonctionnement à fréquence élevée, mais également pour réguler la vitesse du rotor pendant toute cette période. Dans ce cas le circuit de commande du moteur doit comprendre en plus un dispositif pour détecter la vitesse momentanée du rotor et des moyens pour connecter la résistance pendant un temps déterminé lorsque cette vitesse dépasse un certain seuil ou mieux pour brancher la résistance lorsque la vitesse devient supérieure à une première valeur et la déconnecter dès que la vitesse tombe en dessous d'une seconde valeur inférieure à la première. Bien entendu ce système de régulation doit être rendu inopérant au moment de la phase de freinage finale.

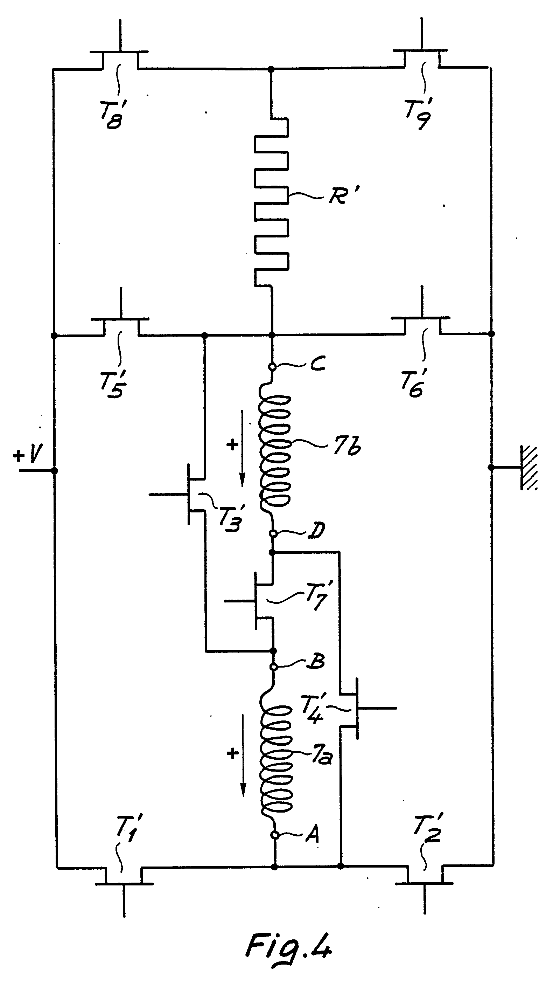

La figure 4 montre à titre d'exemple comment le circuit d'alimentation de la figure 3 doit être modifié lorsque, pour l'ensemble moteur de la figure 1, on prévoit de faire appel à une résistance pour le ralentissement et éventuellement pour le contrôle de la vitesse du rotor.

On voit qu'en fait il ne s'agit pas véritablement d'une modification mais seulement de l'adjonction au circuit d'une troisième branche en parallèle avec les deux premières et formée elle aussi d'un transistor de type P, $T'_8$, et d'un transistor de type N, $T'_9$, la résistance R' par exemple de valeur sensiblement égale à 3R/2 étant branchée entre le point de jonction des drains de ces deux transistors $T'_8$ et $T'_9$ et celui des drains des transistors $T'_5$ et $T'_6$.

Lorsque la résistance R' doit être connectée en série avec les enroulements $R_a$ et $7_b$ les transistors $T'_5$ et $T'_6$ restent tous les deux bloqués et ce sont alors les transistors $T'_8$ et $T'_9$ qui permettent de commander le passage du courant dans un sens ou dans l'autre, à la fois dans la résistance et dans les deux enroulements branchés alors en parallèle.

**0 161 582**

L'invention n'est bien sûr pas limitée au mode particulier de réalisation et à la variante qui viennent d'être décrits.

En particulier, indépendamment de la logique de commande qui n'a pas été décrite en détail, le circuit d'alimentation peut revêtir d'autres formes que celles qui ont été présentées.

On peut également prévoir plusieurs résistances additionnelles pour le freinage et la régulation de la vitesse du rotor ainsi que des moyens pour sélectionner l'une ou l'autre de celles-ci, notamment lorsqu'il est question de faire fonctionner le moteur non seulement à une vitesse faible et à une vitesse élevée mais aussi à une ou plusieurs vitesses intermédiaires.

Par ailleurs comme cela a déjà été dit, l'invention peut être étendue à de nombreuses sortes de moteurs pas à pas.

En dehors des différents moteurs de type Lavet, on peut citer comme exemples d'applications possibles les moteurs normalement à une seule bobine mais véritablement bidirectionnels qui dérivent du genre précité et qui font l'objet du brevet suisse n° 616 302 et de la demande de brevet européen publiée sous le numéro 0 085 648 ou le moteur biphasé dont plusieurs formes sont décrites dans les brevets suisses n^os 625 646 et 634 696.

## Revendications

1. Ensemble moteur comprenant un moteur pas à pas muni d'un rotor, d'un stator et d'un bobinage porté par le stator, et un circuit de commande pour appliquer au bobinage des impulsions motrices de fréquence basse pour faire fonctionner le moteur à petite vitesse et des impulsions motrices de fréquence élevée pour faire fonctionner le moteur à grande vitesse, caractérisé par le fait que ledit bobinage (7) comprend n (n $\geq$ 2) enroulements ($7_a$, $7_b$) et que ledit circuit de commande (2) est conçu pour connecter les n enroulements en série lorsqu'il leur applique les impulsions motrices de fréquence basse et en parallèle lorsqu'il leur applique les impulsions de fréquence élevée.

2. Ensemble moteur selon la revendication 1, caractérisé par le fait que le nombre n d'enroulements ($7_a$, $7_b$) est égal à deux.

3. Ensemble moteur selon la revendication 1 ou 2, caractérisé par le fait que les n enroulements ($7_a$, $7_b$) comportent sensiblement le même nombre (N) de spires et ont sensiblement la même résistance électrique (R).

4. Ensemble moteur selon l'une des revendications 1 à 3, caractérisé par le fait que ledit circuit de commande (2) est conçu pour pouvoir brancher une résistance (R') en série avec les enroulements ($7_a$, $7_b$) lorsque ceux-ci sont connectés en parallèle, pendant une période de freinage du rotor (9) qui précède la fin de l'envoi d'impulsions motrices de fréquence élevée au bobinage (7).

5. Ensemble moteur selon la revendication 4, caractérisé par le fait que ladite résistance a une valeur sensiblement égale à la différence entre celles de la résistance équivalente des enroulements ($7_a$, $7_b$) lorsque ceux-ci sont connectés respectivement en série et en parallèle.

6. Ensemble moteur selon l'une des revendications précédentes, caractérisé par le fait que ledit circuit de commande (2) est conçu pour mettre lesdits enroulements ($7_a$, $7_b$) en court-circuit pendant le temps qui sépare la fin d'une impulsion motrice de fréquence élevée et le début de la suivante.

7. Ensemble moteur selon l'une des revendications 1 à 5, caractérisé par le fait que ledit circuit de commande (2) est conçu pour mettre lesdits enroulements ($7_a$, $7_b$) en circuit ouvert pendant le temps qui sépare la fin d'une impulsion motrice de fréquence élevée et le début de la suivante.

8. Ensemble moteur selon l'une des revendications 1 à 5, caractérisé par le fait que ledit circuit de commande (2) est conçu pour que, lorsque des impulsions motrices de fréquence élevée sont appliquées au bobinage (7) du moteur (1), les enroulements ($7_a$, $7_b$) soient, mis au cours d'une première période, en circuit ouvert pendant le temps qui sépare deux impulsions motrices successives et en court-circuit au cours d'une seconde période.

9. Ensemble moteur selon l'une des revendications précédentes, caractérisé par le fait que les impulsions motrices de fréquence élevée ont une durée inférieure à celle des impulsions motrices de fréquence basse.

10. Ensemble moteur selon la revendication 9, caractérisé par le fait que la durée des impulsions motrices de fréquence élevée est sensiblement égale à la moitié de celle des impulsions motrices de fréquence basse.

## Claims

1. A motor assembly comprising a stepping motor having a rotor, a stator, coil means born by the stator and a control circuit for applying drive pulses of low frequency to the coil means to operate the motor at low speed and of high frequency to operate the motor at high speed, characterized by the fact that said coil means (7) comprises n (n $\geq$ 2) windings ($7_a$, $7_b$) and said control circuit (2) is arranged to connect the n windings in series when low frequency drive pulses are applied thereto and in parallel when high frequency pulses are applied thereto.

8

2. A motor assembly as set forth in claim 1, characterized by the fact that the number n of windings $(7_a, 7_b)$ is two.

3. A motor assembly as set forth in claim 1, characterized by the fact that the n windings $(7_a, 7_b)$ each have basically the same number of turns (N) and basically the same electrical resistance (R).

4. A motor assembly as set forth in claim 1, characterized by the fact that said control circuit (2) is arranged to connect a resistance (R') in series with the windings $(7_a, 7_b)$ when said windings are connected in parallel, said resistance being connected during a braking period of the rotor (9) which precedes the end of application of high frequency drive pulses to the coil means (7).

5. A motor assembly as set forth in claim 4, characterized by the fact that said resistance is of a value essentially equal to the difference between the equivalent resistances of the windings $(7_a, 7_b)$ when said windings are connected respectively in series and in parallel.

6. A motor assembly as set forth in claim 1, characterized by the fact that the control circuit (2) is arranged to short circuit said windings $(7_a, 7_b)$ during the time interval separating the end of a high frequency drive pulse from the beginning of the next one.

7. A motor assembly as set forth in claim 1, characterized by the fact that the control circuit (2) is arranged to open circuit said windings $(7_a, 7_b)$ during the time interval separating the end of a high frequency drive pulse from the beginning of the next one.

8. A motor assembly as set forth in claim 1, characterized by the fact that the control circuit (2) is arranged so that when high frequency drive pulses are applied to the motor coil means (7) the windings $(7_a, 7_b)$ are open circuited during a first period over the time interval separating two successive drive pulses and short circuited during a second period.

9. A motor assembly as set forth in claim 1, characterized by the fact that the high frequency drive pulses are of shorter duration than those of low frequency.

10. A motor assembly as set forth in claim 9, characterized by the fact that the duration of the high frequency drive pulses is basically equal to half that of the low frequency drive pulses.


**Patentansprüche**

1. Motoranordnung, umfassend einen aus Rotor, Stator und vom Stator getragener Spule bestehenden Schrittmotor und eine Steuerschaltung, die zum Antrieb des Motors an der Wicklung Niederfrequenzantriebsimpulse für eine kleine Motordrehzahl und Hochfrequenzantriebsimpulse für eine grosse Motordrehzahl anlegt, dadurch gekennzeichnet, dass die genannte Spule (7) n $(n \geqslant 2)$ Wicklungen $(7_a, 7_b)$ umfasst und dass die genannte Steuerschaltung (2) so aufgebaut ist, dass die n Wicklungen in Serie geschaltet werden, wenn sie ihnen die Niederfrequenzantriebsimpulse anlegt und parallel, wenn sie ihnen die Hochfrequenzimpulse anlegt.

2. Motoranordnung gemäss Anspruch 1, dadurch gekennzeichnet, dass die Anzahl n Wicklungen $(7_a, 7_b)$ gleich zwei ist.

3. Motoranordnung gemäss Anspruch 1 oder 2, dadurch gekennzeichnet, dass die n Wicklungen $(7_a, 7_b)$ dieselbe Anzahl (N) Windungen und denselben elektrischen Widerstand (R) haben.

4. Motoranordnung gemäss einem der Ansprüche 1 bis 3, dadurch gekennzeichnet, dass die genannte Steuerschaltung (2) so ausgelegt ist, dass sie einen Widerstand (R') in Serie mit den Wicklungen $(7_a, 7_b)$ schalten kann, wenn diese parallel geschaltet sind, während einer Bremsperiode des Rotors (9), die dem Ende der Hochfrequenzantriebsimpulsübermittlung zur Spule (7) vorausgeht.

5. Motoranordnung gemäss Anspruch 4, dadurch gekennzeichnet, dass der genannte Widerstand einen Wert hat, der gleich dem Unterschied zwischen jenen des Ersatzwiderstandes der Wicklungen $(7_a, 7_b)$ ist, wenn diese in Serie beziehungsweise parallel geschaltet sind.

6. Motoranordnung gemäss einem der vorstehenden Ansprüche, dadurch gekennzeichnet, dass die genannte Steuerschaltung (2) so ausgelegt ist, dass sie die genannten Wicklungen $(7_a, 7_b)$ während der Zeit kurzschliesst, die zwischen dem Ende eines Hochfrequenzantriebsimpulses und dem Anfang des nächsten liegt.

7. Motoranordnung gemäss einem der Ansprüche 1 bis 5, dadurch gekennzeichnet, dass die genannte Steuerschaltung (2) so ausgelegt ist, dass sie die genannten Wicklungen $(7_a, 7_b)$ während der Zeit, die zwischen dem Ende eines Hochfrequenzantriebsimpulses und dem Anfang des nächsten liegt, in einen offenen Stromkreis schalten kann.

8. Motoranordnung gemäss einem der Ansprüche 1 bis 5, dadurch gekennzeichnet, dass die genannte Steuerschaltung (2) so ausgelegt ist, dass wenn die Hochfrequenzantriebsimpulse an der Spule (7) des Motors (1) angelegt werden, die Wicklungen $(7_a, 7_b)$ im Verlauf einer ersten Periode während der Zeit, die zwei aufeinanderfolgende Antriebsimpulse trennt, in einen offenen Stromkreis geschaltet und im Verlauf einer zweiten Periode kurzgeschlossen werden.

9. Motoranordnung gemäss einem der vorstehenden Ansprüche, dadurch gekennzeichnet, dass die Hochfrequenzantriebsimpulse eine kürzere Dauer haben als die Niederfrequenzantriebsimpulse.

10. Motoranordnung gemäss Anspruch 9, dadurch gekennzeichnet, dass die Dauer der Hochfrequenzantriebsimpulse gleich der Hälfte jener der Niederfrequenzantriebsimpulse ist.

**Fig.1**

**Fig.2**

Fig.3

Fig.4